# EUROPEAN PATENT APPLICATION

(11) **EP 4 782 895 A1**
(43) Date of publication of application: **29.07.2026**
(21) Application number: 24867867.4
(22) Date of filing: 28.06.2024
(51) Int. Cl.: G02B 6/36, B08B 1/30

(54) **OPTICAL CONNECTOR CLEANING TOOL**

(30) Priority: 20.09.2023 JP 2023152504
(71) Applicant: Fujikura Ltd., Tokyo 135-8512 (JP)
(72) Inventor: WATANABE, Junya, Sakura-shi, Chiba 285-8550 (JP); NAKANE, Junichi, Sakura-shi, Chiba 285-8550 (JP)
(74) Representative: Ter Meer Steinmeister & Partner
(86) International application number: PCT/JP2024/023637
(87) International publication number: WO 2025/062782

(57) **Abstract**

An optical connector cleaning tool 1 includes: a cleaning shaft 20 having a pressing surface 211 pressing a cleaning element 5 against a connection end surface 111 of an optical connector 100; a housing 60 that holds a cleaning shaft relatively movable; a first bobbin 31 that feeds the cleaning element; a second bobbin 37 that collects the cleaning element; first and second rollers 33, 34 that sandwich the cleaning element at a portion between the pressing surface and the second bobbin; a first rotational drive mechanism 91 that rotates and drives the first roller in accordance with the relative movement of the cleaning shaft to draw the cleaning element from the first bobbin by the first and second rollers; and a second rotational drive mechanism 92 that rotates and drives the second bobbin in accordance with the relative movement of the cleaning shaft to collect the cleaning element drawn by the first and second rollers to the second bobbin.

## Description

### Technical Field

The present invention relates to an optical connector cleaning tool that cleans a connection end surface of an optical connector.

In designated states where incorporation of documents by reference is accepted, the contents described in Japanese Patent Application No. 2023-152504 filed on September 20, 2023 in Japan are incorporated by reference into this specification and regarded as a part of the description of this specification.

### Background Art

The optical connector cleaning tool includes a feed mechanism that interlocks with a movement of a moving member to draw a fixed amount of a cleaning medium from a feeding bobbin, and a winding mechanism that winds the cleaning medium around a winding bobbin, is known (see, for example, Patent Document 1). The above-described winding mechanism includes a slip mechanism that causes a drive piece to slip with respect to a rotating body when the load of the drive piece that pushes an engagement projection of the rotating body of the winding bobbin reaches a predetermined load.

### Prior Art Document

### Patent Document

Patent Document 1: WO 2020/170539

### Summary of Invention

### Problems to be Solved by Invention

As the number of cleanings increases, the amount of cleaning medium wound around the winding bobbin increases, so a radius of the cleaning medium becomes larger, and an amount of cleaning medium wound per operation of the winding mechanism increases. In contrast, the above slip mechanism prevents the winding bobbin wound a fixed amount of the cleaning medium from winding more of the cleaning medium, but the fine adjustment of the slip mechanism is difficult. Therefore, as the number of cleanings increases, there is a problem that more than a fixed amount of cleaning medium is wound around the winding bobbin and the number of times in which the optical connector can be cleaned is limited.

The problem to be solved by the invention is to provide an optical connector cleaning tool that enables the increase in the number of the cleanings.

### Means for Solving Problems

[1] Aspect 1 of the present invention is an optical connector cleaning tool that cleans a connection end surface of an optical connector, comprising: a cleaning shaft that comprises a pressing surface pressing a cleaning element against the connection end surface and in which the cleaning element is wound on the pressing surface; a housing that holds the cleaning shaft relatively movable along an axis direction of the cleaning shaft; a first bobbin that is housed in the housing and feeds the cleaning element to the pressing surface; a second bobbin that is housed in the housing and collects the cleaning element passing on the pressing surface; first and second rollers that are housed in the housing and sandwich the cleaning element at a portion between the pressing surface and the second bobbin; a first rotational drive mechanism that rotates and drives the first roller in accordance with a relative movement of the cleaning shaft with respect to the housing to draw the cleaning element from the first bobbin by the first and second rollers; and a second rotational drive mechanism that rotates and drives the second bobbin in accordance with a relative movement of the cleaning shaft with respect to the housing to collect the cleaning element drawn by the first and second rollers to the second bobbin.
[2] Aspect 2 of the present invention may be the optical connector cleaning tool of Aspect 1, wherein the optical connector cleaning tool may further comprise a first rotation restriction mechanism that restricts rotation of the second bobbin when a tension more than a predetermined value is applied to the second bobbin via the cleaning element.
[3] Aspect 3 of the present invention may be the optical connector cleaning tool of Aspect 1 or 2, wherein the optical connector cleaning tool may further comprise a first rotating body mounted to the first roller, and the first rotational drive mechanism may comprise: a first pinion gear part included in the first rotating body; and a first rack gear that is relatively movable with respect to the first rotating body in accordance with a relative movement of the cleaning shaft with respect to the housing and that is engaged with the first pinion gear part.
[4] Aspect 4 of the present invention may be the optical connector cleaning tool of any one of Aspects 1 to 3, wherein the optical connector cleaning tool may further comprise a second rotating body mounted to the second bobbin, and the second rotational drive mechanism may comprise: a second pinion gear part included in the second rotating body; and a second rack gear that is relatively movable with respect to the second rotating body in accordance with a relative movement of the cleaning shaft with respect to the housing and that is engaged with the second pinion gear part.
[5] Aspect 5 of the present invention may be the optical connector cleaning tool of Aspect 2, wherein the optical connector cleaning tool may further comprise a second rotating body mounted to the second bobbin, and the first rotation restriction mechanism may comprise: a first engagement part comprising a first inclined surface and included in the second rotating body; and a second engagement part comprising a second inclined surface corresponding to the first inclined surface and included in the second bobbin, when a tension more than the predetermined value is applied to the second bobbin via the cleaning element, the rotating body may idle with respect to the second bobbin by disengaging the first engagement part and the second engagement part.
[6] Aspect 6 of the present invention may be the optical connector cleaning tool of any one of Aspects 1 to 5, wherein the optical connector cleaning tool may further comprise: a first rotating body mounted to the first roller; a support body that rotatably supports the first roller and the first rotating body; and a second rotation restriction mechanism that prohibits rotation of the first roller in a first direction, the second rotation restriction mechanism may comprise: a third engagement part comprising a third inclined surface and included in the first rotating body; a fourth engagement part comprising a fourth inclined surface corresponding to the third inclined surface and included in the first roller; a fifth engagement part included in the first roller; and a sixth engagement part included in the support body, when the first rotating body rotates in the first direction, the first rotating body may idle with respect to the first roller by disengaging the third engagement part and the fourth engagement part, and rotation of the first roller in the first direction may be prohibited by engaging the fifth engagement part and the sixth engagement part.
[7] Aspect 7 of the present invention may be the optical connector cleaning tool of Aspects 1 to 6, wherein the optical connector cleaning tool may further comprises a biasing mechanism that biases the second roller toward the first roller.
[8] Aspect 8 of the present invention may be the optical connector cleaning tool of Aspects 1 to 7, wherein the first roller may comprise a first contact surface that contacts the cleaning element, the second roller may comprise a second contact surface that contacts the cleaning element, and at least one of the first and second contact surfaces may be made of an elastic material.

### Effects of Invention

According to the invention, since the first and second rollers sandwich the cleaning element at a portion between the pressing surface and the second bobbin, the first rotational drive mechanism rotates and drives the first roller in accordance with the relative movement of the cleaning shaft with respect to the housing to draw the cleaning element from the first bobbin by the first and second rollers, and the second rotational drive mechanism rotates and drives the second bobbin in accordance with the above relative movement to collects the cleaning element drawn by the first and second rollers to the second bobbin, it is possible to increase the number of cleanable times of the optical connector by the optical connector cleaning tool.

### Brief Description of Drawings

FIG. 1 is a front view illustrating an optical connector as an object to be cleaned by an optical connector cleaning tool in an embodiment of the present invention.
FIG. 2 is a perspective view of the optical connector cleaning tool in the embodiment of the present invention.
FIG. 3 is an exploded perspective view of the optical connector cleaning tool in the embodiment of the present invention.
FIG. 4 is an exploded perspective view of a cleaning unit in the embodiment of the present invention.
FIG. 5(a) is a front view illustrating a front end portion of a cleaning head in the embodiment of the present invention, and FIG. 5(b) is a cross-sectional view taken along the line VB-VB in FIG. 5(a).
FIG. 6 is a perspective view of a first bobbin in the embodiment of the present invention.
FIG. 7 is a cross-sectional view illustrating an internal structure of the cleaning unit in the embodiment of the present invention, and is a cross-sectional view taken along the line VII-VII in FIG. 3.
FIG. 8 is a perspective view illustrating a first roller and a first rotating body in the embodiment of the present invention.
FIG. 9 is a side view illustrating teeth of gear parts of the first roller and the first rotating body in the embodiment of the present invention.
FIG. 10 is a perspective view illustrating first and second rotational drive mechanisms in the embodiment of the present invention.
FIG. 11 is a perspective view illustrating a second bobbin and a second rotating body in the embodiment of the present invention.
FIG. 12 is a side view illustrating teeth of gear parts of the second bobbin and the second rotating body in the embodiment of the present invention.
FIG. 13 is a perspective view of a support body in the embodiment of the present invention.
FIG. 14 is a cross-sectional view taken along the line XIV-XIV in FIG. 13.
FIG. 15 is a perspective view of an adjustment member in the embodiment of the present invention.
FIGS. 16(a) and 16(b) are diagrams illustrating an internal operation of the optical connector cleaning tool in the embodiment of the present invention, FIG. 16(a) is a diagram illustrating a state in which a housing is pushed in with respect to the cleaning unit, and FIG. 16(b) is a diagram illustrating a state in which a pushing operation of the housing with respect to the cleaning unit is released.

### Mode(s) for Carrying out the Invention

Hereinafter, embodiments of the present invention will be described based on the drawings.

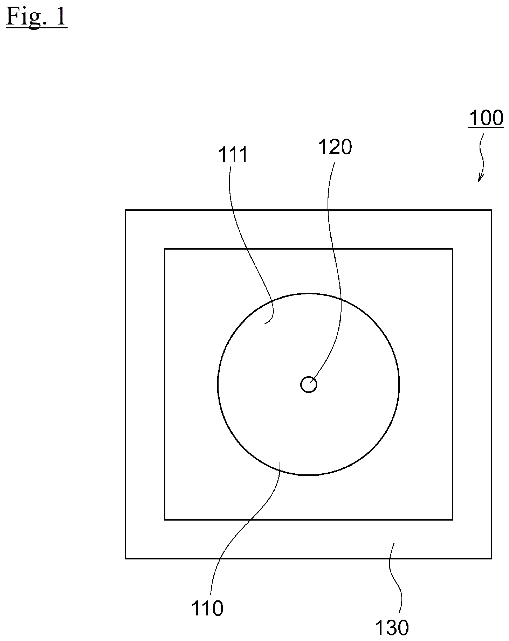

In the embodiment of the present invention, an optical connector cleaning tool 1 is a cleaner that cleans a connection end surface of an optical connector that connects optical fibers to each other. FIG. 1 is a front view illustrating an optical connector 100 as an object to be cleaned by the optical connector cleaning tool 1 in the present embodiment.

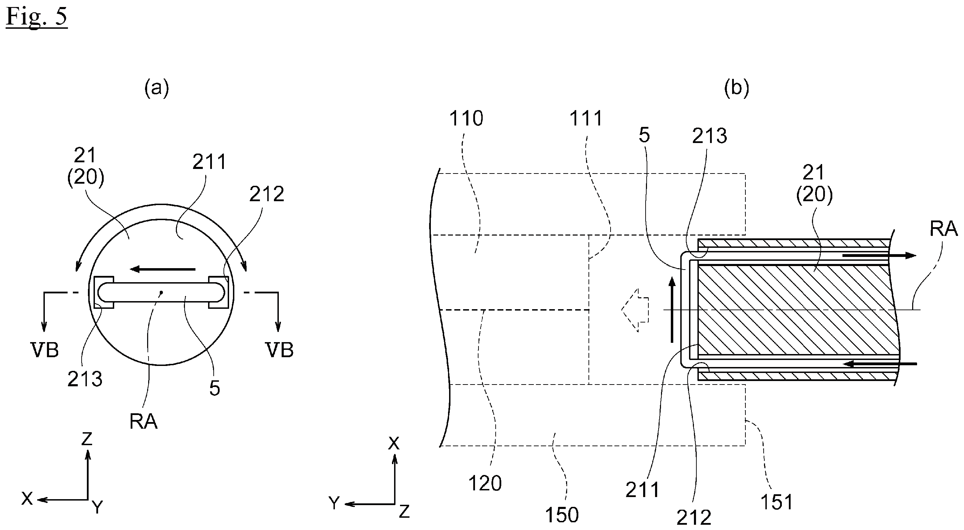

The optical connector 100, which is the object to be cleaned by the optical connector cleaning tool 1, is not particularly limited, but is a single-core connection type optical connector plug. As illustrated in FIG. 1, the optical connector 100 includes a ferrule 110 having a cylindrical shape and a housing 130 that houses the ferrule 110 in its interior. The ferrule 110 has a fiber holding hole that extends through the ferrule 110 in the longitudinal direction thereof (see FIG. 5(b)). An optical fiber 120 is inserted into the fiber holding hole, and the optical fiber 120 is fixed to the ferrule 110 by an adhesive or the like. The optical fiber 120 is exposed from a circular connection end surface 111 of the ferrule 110.

Specific examples of the optical connector 100 are not limited, but examples include a single-fiber optical connector such as a SC (Single-fiber Coupling) connector specified in JIS C 5973, a FC (Fiber Connector) connector specified in JIS C 5970, a MU (Miniature Universal) connector specified in JIS C 5983, or a LC (Lucent Connector) connector.

In the case in which a pair of optical connectors 100, each including the above-described ferrule 110, are connected, an adapter is used. Specifically, the pair of optical connectors 100 are inserted through the openings on both sides of the adapter, and the ferrules 110 are respectively inserted into the openings on both sides of a sleeve 150 (see FIG. 5(b)) included in the adapter. Then, by abutting the connection end surfaces 111 of the pair of ferrules 110 within the sleeve 150, the optical fibers 120 respectively exposed from the connection end surfaces 111 of the ferrules 110 are optically connected to each other.

If a contaminant such as dirt, dust, and oil is adhered to the connection end surface 111 of the ferrule 110 during the abutment, it may become a cause of a damage during a connection and a disconnection, an increase of a transmission loss, and the like. Therefore, before connecting the optical connectors 100 to each other, the connection end surface 111 of the ferrule 110 is cleaned using the optical connector cleaning tool 1 described below.

While the above-described optical connector 100 is an optical connector plug used in a plug-adapter-plug coupling system, the connection end surface of the ferrule of the optical connector receptacle used in the plug-receptacle coupling system may be cleaned using the optical connector cleaning tool 1 described below. Specifically, the optical connector receptacle includes a ferrule attached to the front end of the optical fiber and incorporated into a housing into which the optical connector plug is inserted.

Alternatively, a cap having an inner hole having the same shape as the inner hole of the adapter may be attached to the front end of the optical connector cleaning tool 1, and the optical connector plug may be inserted into the cap to clean the connection end surface of the optical connector plug alone in a state where the optical connector plug is not inserted into the adapter.

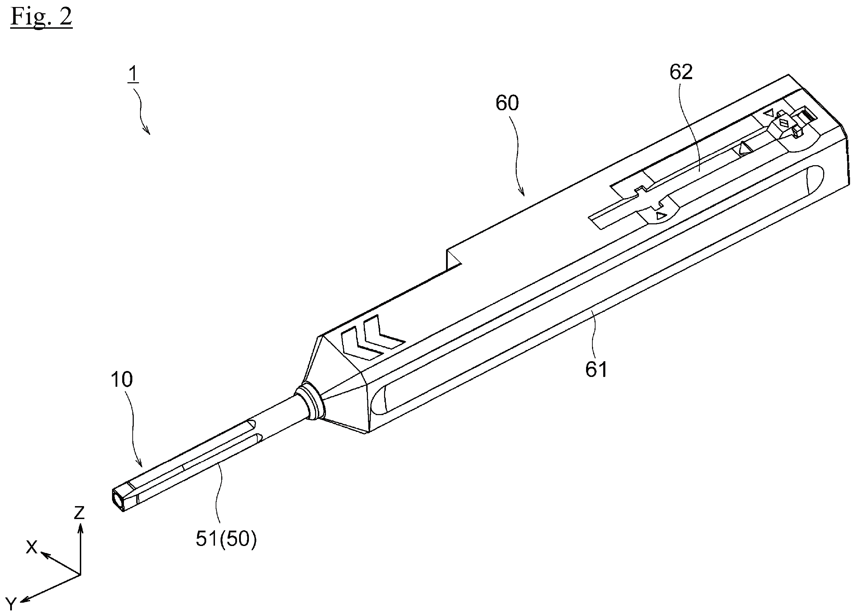

The configuration of the optical connector cleaning tool 1 in the present embodiment will be described in detail below with reference to FIGS. 2 to 15.

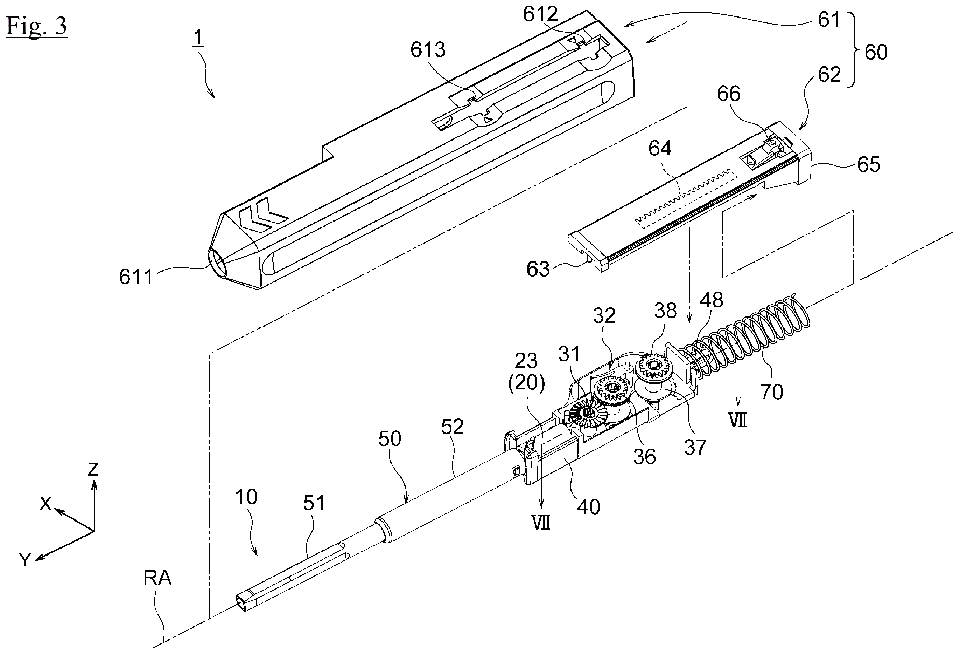

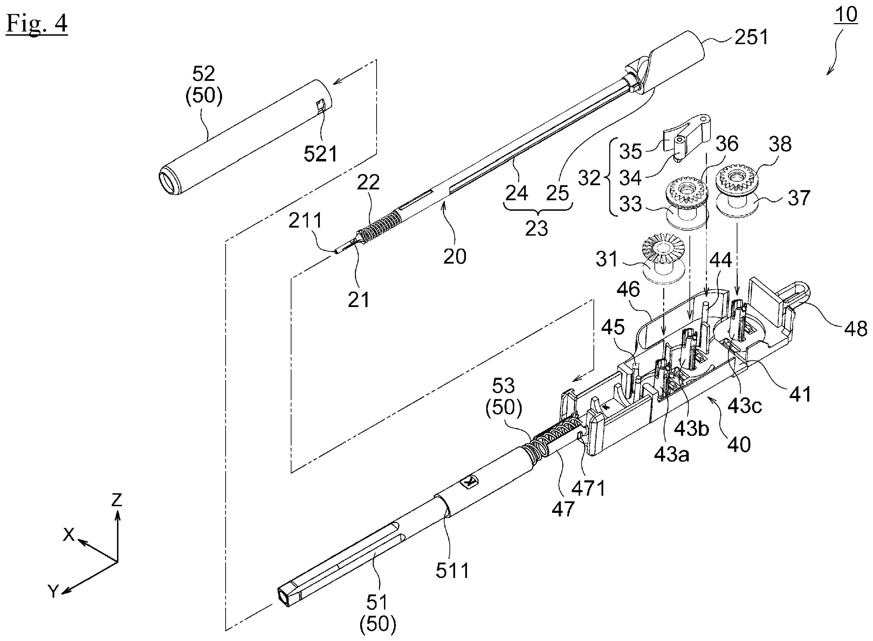

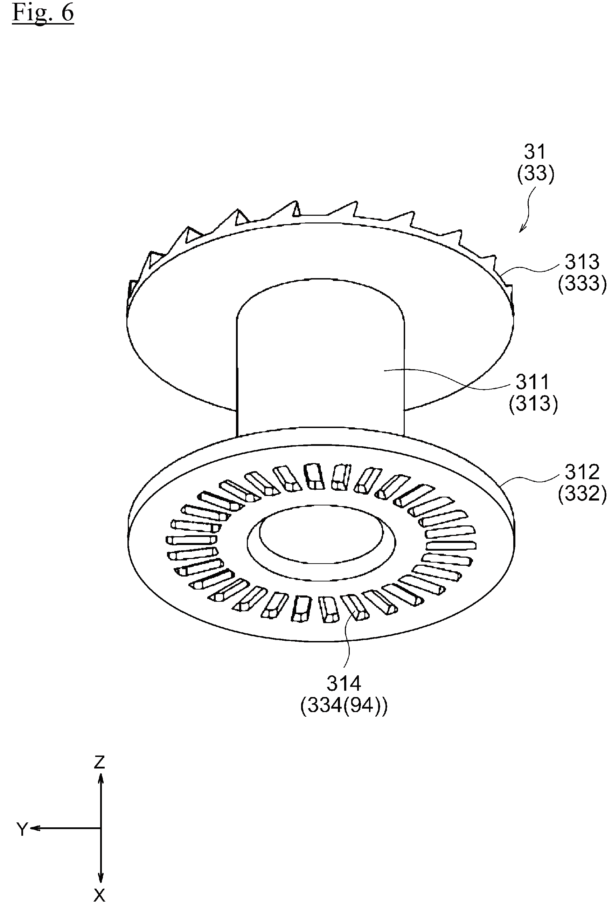

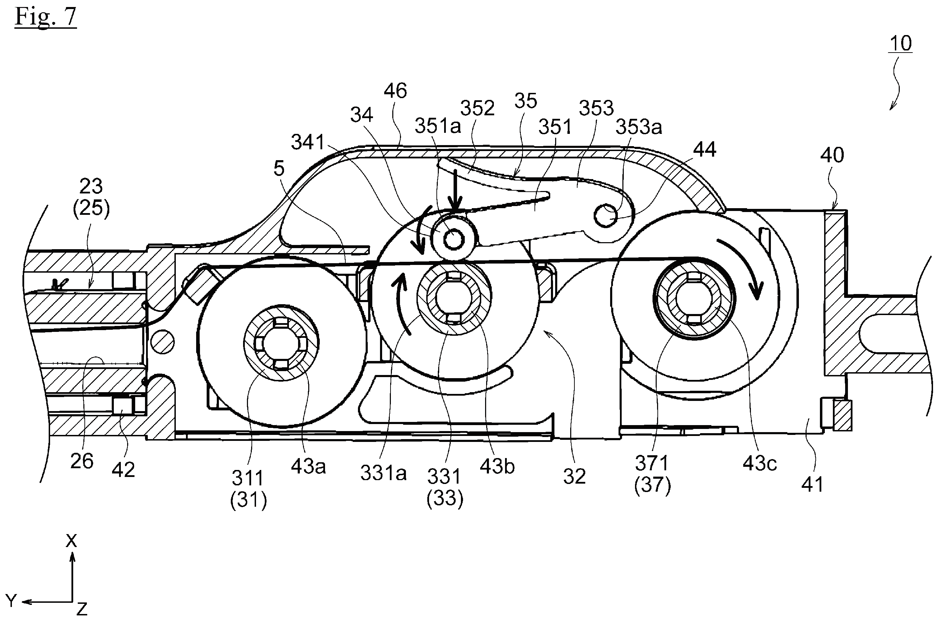

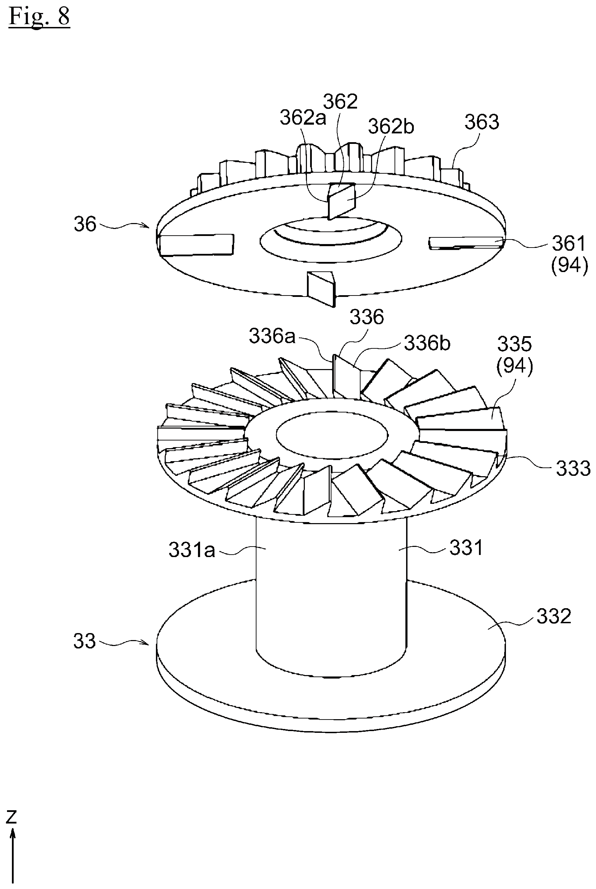

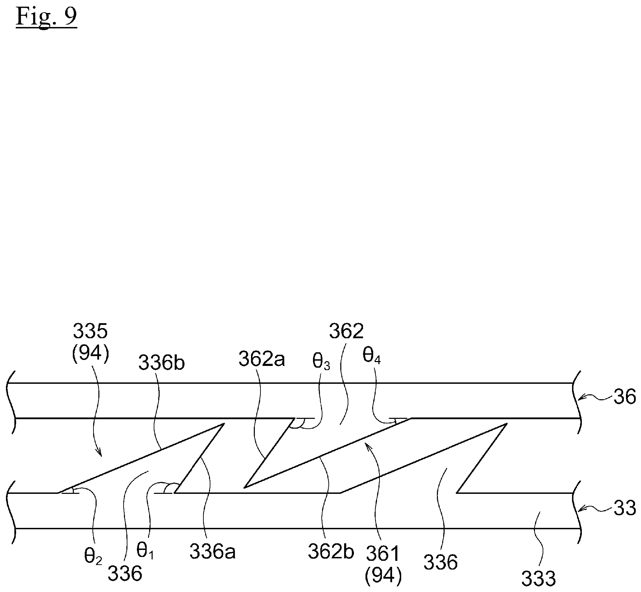

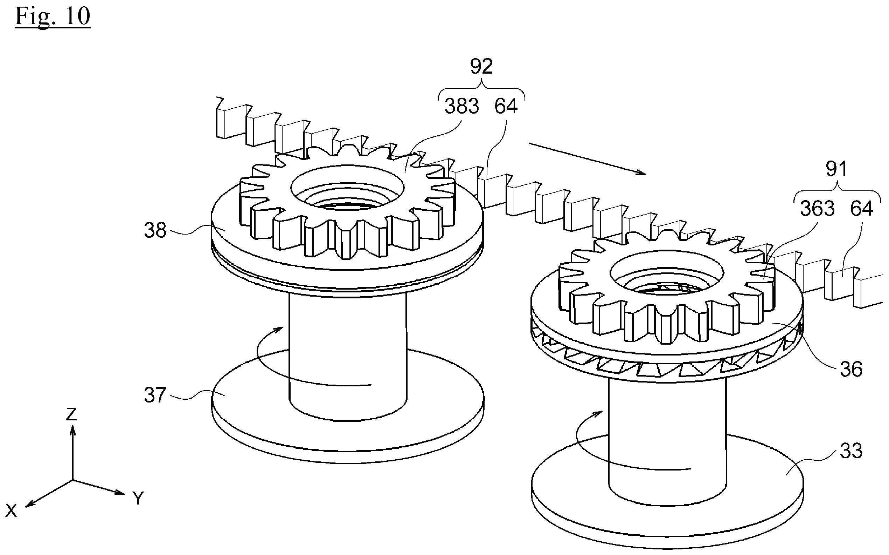

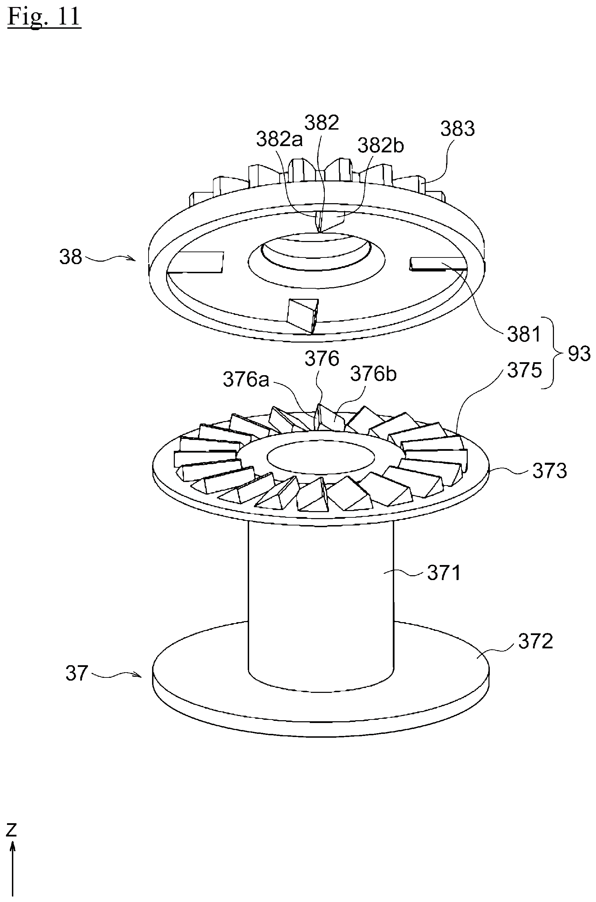

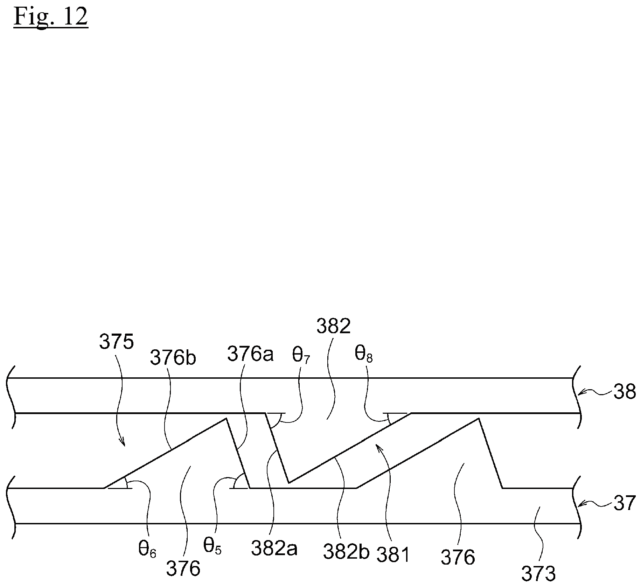

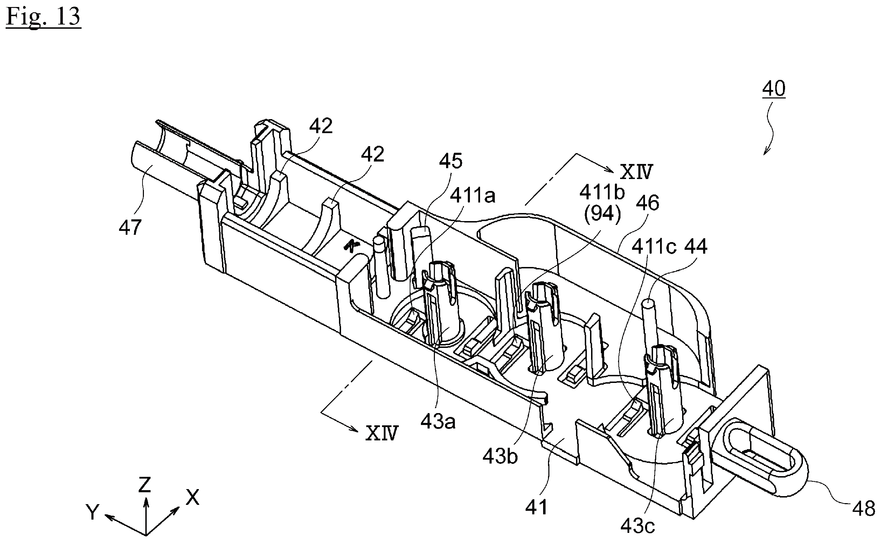

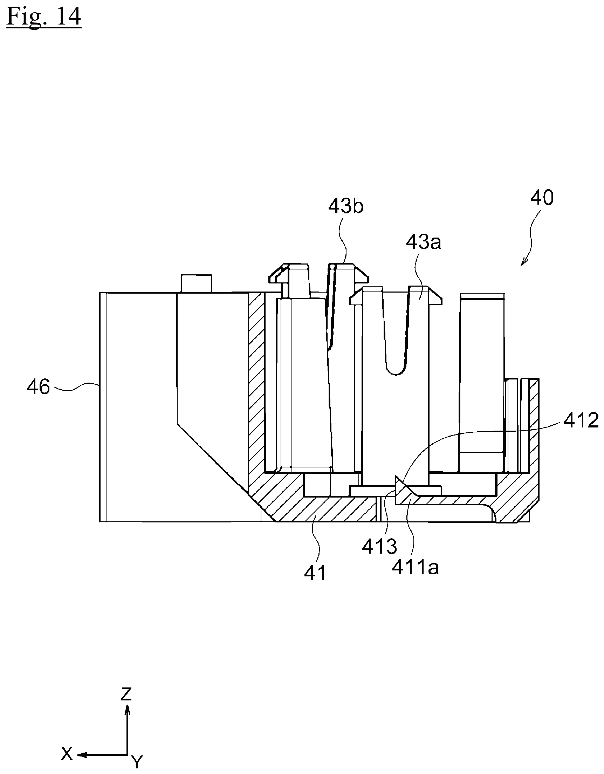

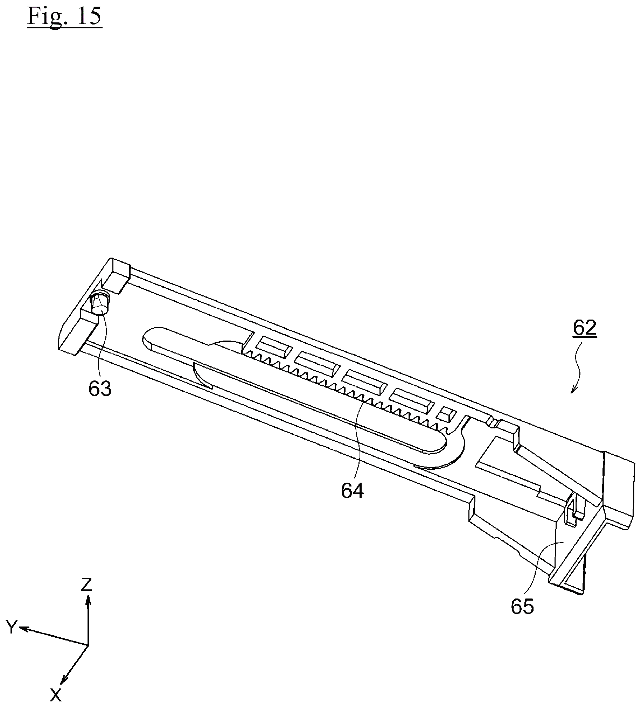

FIG. 2 is a perspective view of the optical connector cleaning tool 1 in the present embodiment, FIG. 3 is an exploded perspective view of the optical connector cleaning tool 1 in the present embodiment, and FIG. 4 is an exploded perspective view of a cleaning unit 10 in the present embodiment. FIG. 5(a) is a front view illustrating a front end portion of a cleaning head 21 in the present embodiment, and FIG. 5(b) is a cross-sectional view taken along the line VB-VB in FIG. 5(a). FIG. 6 is a perspective view of a first bobbin 31 in the present embodiment. FIG. 7 is a cross-sectional view illustrating an internal structure of the cleaning unit 10 in the present embodiment and is a cross-sectional view taken along the line VII-VII in FIG. 3. FIG. 8 is a perspective view illustrating a first roller 33 and a first rotating body 36 in the present embodiment, and FIG. 9 is a side view illustrating teeth 336, 362 of gear parts 335, 361 of the first roller 33 and the first rotating body 36 in the present embodiment. FIG. 10 is a perspective view illustrating first and second rotational drive mechanisms 91, 92 in the present embodiment. FIG. 11 is a perspective view illustrating a second bobbin 37 and a second rotating body 38 in the present embodiment, and FIG. 12 is a side view illustrating teeth 376, 382 of gear parts 375, 381 of the second bobbin 37 and the second rotating body 38 in the present embodiment. FIG. 13 is a perspective view of a support body 40 in the present embodiment, and FIG. 14 is a cross-sectional view taken along the line XIV-XIV in FIG. 13. FIG. 15 is a perspective view of an adjustment member 62 in the present embodiment.

The optical connector cleaning tool 1 (hereinafter simply referred to as a "cleaner 1") in the present embodiment includes the cleaning unit 10, a housing 60, and a first biasing member 70, as illustrated in FIGS. 2 to 4. The cleaning unit 10 is housed in the housing 60 such that the cleaning unit 10 is relatively movable with respect to the housing 60 along the Y-axis direction in the figure. The first biasing member 70 is interposed between the cleaning unit 10 and the housing 60 and biases the cleaning unit 10 toward the front side (in the +Y-direction in the figure). The cleaning unit 10 includes a cleaning shaft 20, the first bobbin 31, a roller unit 32, the first rotating body 36, the second bobbin 37, the second rotating body 38, the support body 40, and a guide nozzle 50. The cleaner 1 cleans the optical connector 100 by pressing a cleaning element 5, which is hung around the cleaning shaft 20, against the connection end surface 111 of the ferrule 110 of the optical connector 100 with a pressing surface 211 (described below) of the cleaning shaft 20.

The cleaning element 5 is a continuous body formed by processing a cleaning cloth into a threadlike or stringlike shape. Specific examples of the cleaning cloth may include a nonwoven fabric or a woven fabric composed of ultra-fine fibers such as polyester or nylon. In the present embodiment, the cleaning element 5 has a circular cross-sectional shape, but it is not particularly limited thereto, and the cross-sectional shape of the cleaning element 5 may be a polygonal shape. Although not particularly limited thereto, the cleaning element 5 has a diameter of 0.1 mm to 1 mm, and preferably has a diameter of 0.2 mm to 0.3 mm. The narrow tape-like continuous body formed by the processing of the cleaning cloth into a belt-like shape may be used as the cleaning element 5.

The cleaning shaft 20 is an elongated member configured to press the cleaning element 5 against the connection end surface 111 of the optical connector 100. The cleaning element 5 is held by the cleaning shaft 20 so that the cleaning element 5 is turned back at the pressing surface 211. The unused cleaning element 5 is wound around the first bobbin 31. The roller unit 32 draws the cleaning element 5 from the first bobbin 31 to feed the unused cleaning element 5 to the pressing surface 211 of the cleaning shaft 20. The cleaning element 5 drawn from the pressing surface 211 of the cleaning shaft 20 into the roller unit 32 is then wound around the second bobbin 37 to be collected. The cleaning shaft 20 includes the cleaning head (the head member) 21, a second biasing member 22, and a shaft member 23.

The cleaning head 21 is a member forming a front end portion of the cleaning shaft 20. As illustrated in FIGS. 5(a) and 5(b), the cleaning head 21 has, at a front end portion thereof, the pressing surface 211 that presses the cleaning element 5 against the connection end surface 111 of the optical connector 100. The pressing surface 211 has a shape (in the present embodiment, circular) corresponding to a shape of the connection end surface 111 of the ferrule 110 of the optical connector 100 which is the object to be cleaned.

A pair of guide holes 212, 213 are formed in the pressing surface 211 and allow the cleaning element 5 to pass through the interior of the cleaning shaft 20. The unused cleaning element 5 fed from the first bobbin 31 passes through an interior of the cleaning shaft 20 and one guide hole 212 and is fed to the pressing surface 211. The cleaning element 5 fed onto the pressing surface 211 passes over the center of the pressing surface 211 and moves on the pressing surface 211 toward the other guide hole 213. The used cleaning element 5 then passes through the other guide hole 213 and the interior of the cleaning shaft 20 and is wound around the second bobbin 37 to be collected. Instead of the above-described guide holes 212, 213, a pair of guide grooves may be formed on the side surfaces of the cleaning head 21, and the cleaning element 5 may be fed to and collected from the pressing surface 211 through the guide grooves.

The shaft member 23 includes a shaft main body 24 and an expanded part 25, as illustrated in FIG. 4. Both the shaft main body 24 and the expanded part 25 have a cylindrical shape, and the expanded part 25 is connected to the rear end of the shaft main body 24. Although not particularly limited, the shaft member 23 is made of, for example, a resin material, and the shaft main body 24 and the expanded part 25 are integrally formed.

The above-described cleaning head 21 is disposed on a front end side of the shaft main body 24. The cleaning head 21 is supported by the shaft main body 24 such that the cleaning head 21 is movable along the Y-axis direction in the figure with respect to the shaft main body 24. The Y-axis direction in the figure is an insertion/extraction direction of the cleaner 1 to/from the adapter during the cleaning operation, as well as the axis direction (the longitudinal direction) of the cleaning shaft 20, and the pressing direction in which the cleaning head 21 presses the pressing surface 211 via the cleaning element 5 against the connection end surface 111 of the ferrule 110. Although not specifically illustrated in the figure, the cleaning shaft 20 includes the engagement structure that inhibits the relative rotation of the cleaning head 21 with respect to the shaft main body 24 about the rotation axis RA.

The second biasing member 22 is interposed between the cleaning head 21 and the shaft main body 24. The second biasing member 22 biases the cleaning head 21 forward (in the +Y-direction in the figure) with respect to the shaft main body 24, and the pressing surface 211 of the cleaning head 21 can press the cleaning element 5 against the connection end surface 111 of the optical connector 100 with an appropriate pressing force. Examples of the second biasing member 22 include an elastic body such as a spring or a rubber, and examples of the spring include a coil spring.

A spiral cam groove 251 is formed on the outer circumferential surface of the expanded part 25. The rotation mechanism that rotates the cleaning shaft 20 is implemented by the cam groove 251 and a cam pin 63 of the housing 60 described below. The rotation mechanism rotates the cleaning shaft 20 around the rotation axis RA parallel to the longitudinal direction of the cleaning shaft 20 as the center in accordance with the relative movement of the support body 40 with respect to the housing 60.

The shaft member 23 has, in an interior thereof, a passageway 26 (see FIG. 7) that extends through the shaft member 23 along the longitudinal direction. The cleaning element 5 fed from the first bobbin 31 passes through the passageway 26 of the shaft member 23 and is fed to the pressing surface 211 of the cleaning head 21. Meanwhile, the cleaning element 5 used on the pressing surface 211 of the cleaning head 21 passes through the passageway 26 of the shaft main body 24 and is wound around the second bobbin 37 to be collected. In FIG. 7, the cleaning element 5 wound around the first bobbin 31 and the cleaning element 5 fed from the first bobbin 31 into the passageway 26 are not illustrated.

The first bobbin 31 is a bobbin that feeds the cleaning element 5 used on the pressing surface 211 of the cleaning head 21 and is the bobbin that feeds the cleaning element 5 to the pressing surface 211. As illustrated in FIG. 6, the first bobbin 31 includes a body part 311 and a pair of flange parts 312, 313. The first bobbin 31 is made of, for example, a resin material, and the body part 311 and the flange parts 312, 313 are integrally formed.

The unused cleaning element 5 is wound around the body part 311 of the first bobbin 31 in advance. The body part 311 has a cylindrical shape, and a first shaft part 43a (described below) of the support body 40 is inserted in the body part 311. The pair of flange parts 312, 313 have a disc shape with the outer diameter larger than an outer diameter of the body part 311 and are provided at both ends of the body part 311.

A plurality of recesses 314 are formed in an outer surface (a surface on the -Z-direction side in the figure) of a lower side (the -Z-direction side in the figure) flange part 312 of the first bobbin 31. The plurality of recesses 314 are arranged intermittently along a circumferential direction of the flange part 312. A claw part 411a (see FIG. 14) of the support body 40 described below is engageable with the recess 314. The claw part 411a permits a rotation of the first bobbin 31 in one direction (rightward (clockwise) in FIG. 7) and prohibits a rotation of the first bobbin 31 in the other direction (leftward (counterclockwise) in FIG. 7).

The roller unit 32 is a unit that feeds the cleaning element 5 to the pressing surface 211 of the cleaning shaft 20 by drawing the cleaning element 5 from the first bobbin 31 in accordance with the relative movement of the cleaning shaft 20 with respect to the housing 60. The roller unit 32 includes the first roller 33, a second roller 34, and a support member 35, as illustrated in FIGS. 4 and 7.

As illustrated in FIG. 8, the first roller 33 includes a body part 331 and a pair of flange parts 332, 333. The first roller 33 is made of, for example, a resin material, and the body part 331 and the flange parts 332, 333 are integrally formed. The body part 331 has a cylindrical shape, and a second shaft part 43b (described below) of the support body 40 is inserted into the body part 331. The pair of flange parts 332, 333 have a disk shape with an outer diameter larger than an outer diameter of the body 331 and are provided at both ends of the body part 331. As illustrated in FIGS. 6 and 8, a structure of the first bobbin 31 and a structure of the first roller 33 are the same in the present embodiment, but the first bobbin 31 need not be provided with the gear part 335 on the flange part 313.

Similar to the recess 314 of the first bobbin 31 described above, a plurality of recesses 334 (see FIG. 6) are formed in an outer surface (a surface on the -Z-direction side in the figure) of a lower side (the -Z-direction side in the figure) flange part 332 of the first roller 33. The plurality of recesses 334 are intermittently disposed along a circumferential direction of the flange part 332. A claw part 411b (see FIG. 13) of the support body 40 described below is engageable with the recess 334. The claw part 411b permits a rotation of the first roller 33 in one direction (rightward (clockwise) in FIG. 7) and prohibits a rotation of the first roller 33 in the other direction (leftward (counterclockwise) in FIG. 7).

As illustrated in FIG. 8, the gear part 335 is formed on an outer surface (a surface on the +Z-direction side in the figure) of an upper side (the +Z-direction side in the figure) flange part 333 of the first roller 33. Each of the teeth 336 constituting the gear part 335 has a reverse inclined surface 336a on one side and an inclined surface 336b on the other side. Although not particularly limited, as illustrated in FIG. 9, an angle θ₁ of the reverse inclined surface 336a relative to a main surface of the flange part 333 of the first roller 33 may be 90° or more and 135° or less (90° ≤ θ₁ ≤ 135°). In contrast, an angle θ₂ of the inclined surface 336b relative to the main surface of the flange part 333 of the first roller 33 may be more than 0° and less than 45° (0° < θ₂ < 45°).

As illustrated in FIG. 4, the second roller 34 is a member having a cylindrical shape. As illustrated in FIG. 7, the second roller 34 is supported by the support member 35 such that an outer circumferential surface 341 of the second roller 34 is in contact with an outer circumferential surface 331a of the body part 331 of the first roller 33. The first roller 33 and the second roller 34 are disposed on a path of the cleaning element 5 between the pressing surface 211 of the cleaning shaft 20 and the second bobbin 37 and sandwich the cleaning element 5 at a portion between the pressing surface 211 of the cleaning shaft 20 and the second bobbin 37. The cleaning element 5 is fed from the pressing surface 211 side to the second bobbin 37 side by rotating the first and second rollers 33, 34.

The outer circumferential surface 341 of the second roller 34 may be made of a rubber or another elastic material, or the outer circumferential surface 331a of the first roller 33 may be made of a rubber or another elastic material. Alternatively, the outer circumferential surfaces 331a, 341 of both the first and second rollers 33, 34 may be made of a rubber or another elastic material. This can further suppress the slippage of the cleaning element 5 between the first and second rollers 33, 34. The outer circumferential surface 331a of the first roller 33 corresponds to one example of the "first contact surface" of the aspect of the present invention, and the outer circumferential surface 341 of the second roller 34 corresponds to one example of the "second contact surface" of the aspect of the present invention.

The support member 35 that supports the second roller 34 includes a support piece 351, an elastic piece 352, and a bent portion 353. The support piece 351 and the elastic piece 352 are connected via the bent portion 353. A support pin 44 (described below) of the support body 40 is inserted into an insertion hole 353a formed in the bent portion 353, and the support member 35 is supported by the support body 40.

The second roller 34 is inserted into a shaft part 351a provided at a front end portion of the support piece 351 and is rotatably supported by the support piece 351. The outer circumferential surface 341 of the second roller 34 is in contact with the outer circumferential surface 331a of the first roller 33, and an end portion of the elastic piece 352 is in contact with a side wall 46 (described below) of the support body 40, and the elastic piece 352 is elastically deformed toward the support piece 351. Therefore, the second roller 34 is biased toward the first roller 33 by the support member 35. The support member 35 corresponds to one example of the "biasing mechanism" the aspect of the present invention. Instead of the support member 35, the elastic member such as a spring or a rubber may be used to bias the second roller 34 toward the first roller 33, and the examples of the spring include the coil spring and the torsion spring.

The first rotating body 36 is a gear member attached to the first roller 33, as illustrated in FIG. 4. Specifically, the second shaft part 43b of the support body 40, which is inserted into an inner hole of the first roller 33, is also inserted into an inner hole of the first rotating body 36. As a result, the first rotating body 36 is adjacent to an outer surface of the first roller 33 and is coaxially disposed with the first roller 33. As illustrated in FIG. 8, the first rotating body 36 includes the gear part 361 and a pinion gear part 363. The first rotating body 36 is made of, for example, a resin material, and the gear part 361 and the pinion gear part 363 are integrally formed.

The gear part 361 is formed on the lower surface (a surface on the -Z-direction side in the figure) of the first rotating body 36 such that the gear part 361 faces the gear part 335 of the first roller 33. Each of the teeth 362 constituting the gear part 361 has a reverse inclined surface 362a on one side and an inclined surface 362b on the other side, similarly to the gear part 335 of the first roller 33 described above. Although not particularly limited, as illustrated in FIG. 9, an angle θ₃ of the reverse inclined surface 362a relative to a main surface of the first rotating body 36 may be 90° or more and 135° or less (90° ≤ θ₃ ≤ 135°). In contrast, an angle θ₄ of the inclined surface 362b relative to the main surface of the first rotating body 36 may be more than 0° and less than 45° (0° < θ₄ < 45°). The reverse inclined surface 336a of the first roller 33 faces the reverse inclined surface 362a of the first rotating body 36, and the inclined surface 336b of the first roller 33 faces the inclined surface 362b of the first rotating body 36.

When the first rotating body 36 rotates in one direction (rightward (clockwise) in FIG. 7), the reverse inclined surfaces 336a, 362a of the gear parts 335, 361 are engaged with each other, and the first roller 33 rotates together with the first rotating body 36. Conversely, as described above, rotation of the first roller 33 in the other direction (leftward (counterclockwise) in FIG. 7) is prohibited by the recess 334 of the first roller 33 and the claw part 411b of the support body 40. Therefore, when the first rotating body 36 rotates in the other direction (leftward (counterclockwise) in FIG. 7), the inclined surfaces 336b, 362b cause the teeth 362 of the first rotating body 36 to ride over the teeth 336 of the first roller 33, thereby the first rotating body 36 rotates idly with respect to the first roller 33.

A second rotation restriction mechanism 94 is implemented by the gear parts 335, 361 of the first roller 33 and the first rotating body 36, the recess 334 of the first roller 33, and the claw part 411b of the support body 40. The second rotation restriction mechanism 94 permits the rotation of the first roller 33 in one direction (rightward (clockwise) in FIG. 7) and prohibits the rotation of the first roller 33 in the other direction (leftward (counterclockwise) in FIG. 7).

The gear part 361 of the first rotating body 36 corresponds to one example of the "third engagement part" in the aspect of the present invention, and the inclined surface 362b of the gear part 361 corresponds to one example of the "third inclined surface" in the aspect of the present invention. Further, the gear part 335 of the first roller 33 corresponds to one example of the "fourth engagement part" in the aspect of the present invention, and the inclined surface 336b of the gear part 335 corresponds to one example of the "fourth inclined surface" in the aspect of the present invention. The recess 334 of the first roller 33 corresponds to one example of the "fifth engagement part" in the aspect of the present invention, and the claw part 411b of the support body 40 corresponds to one example of the "sixth engagement part" in the aspect of the present invention. Furthermore, the other direction of the first roller 33 (leftward (counterclockwise) in FIG. 7) corresponds to one example of the "first direction" in the aspect of the present invention.

The pinion gear part 363 of the first rotating body 36 is formed on an upper surface (a surface on the +Z-direction side in the figure) of the first rotating body 36. As illustrated in FIG. 10, a rack gear part 64 (described below) of the housing 60 is engaged with the pinion gear part 363. The first rotational drive mechanism 91, which rotates the first roller 33 to draw the cleaning element 5 from the first bobbin 31 by the first and second rollers 33, 34, is implemented by the pinion gear part 363 and the rack gear part 64. The first rotational drive mechanism 91, by rotationally driving the first roller 33 in accordance with the relative movement of the cleaning shaft 20 with respect to the housing 60, draws the cleaning element 5 from the first bobbin 31 by the first and second rollers 33, 34 and feeds the cleaning element 5 to the pressing surface 211. The first rotational drive mechanism 91 and the roller unit 32 can feed a fixed amount of the cleaning element 5 from the first bobbin 31 to the pressing surface 211.

The second bobbin 37 is a bobbin that winds the cleaning element 5 used on the pressing surface 211 of the cleaning head 21 and is the bobbin that collects the cleaning element 5 passing on the pressing surface 211. As illustrated in FIG. 11, the second bobbin 37 includes a body part 371 and a pair of flange parts 372, 373. The second bobbin 37 is made of, for example, the resin material, and the body part 371 and the flange parts 372, 373 are integrally formed.

The used cleaning element 5 is wound around the body part 371. The body part 371 has a cylindrical shape, and a third shaft part 43c (described below) of the support body 40 is inserted in the body part 371. The pair of flange parts 372, 373 have a disk shape with an outer diameter larger than an outer diameter of the body part 371 and are provided at both ends of the body part 371. The second bobbin 37 differs from the first roller 33 described above in a respect that a shape of the gear part 375 is different from a shape of the gear part 335.

Although not specifically illustrated, similar to the recess 314 of the first bobbin 31 described above, a plurality of recesses are formed in an outer surface (a surface on the -Z-direction side in the figure) of the lower side (-Z-direction side in the figure) flange part 372 of the second bobbin 37. The plurality of recesses are arranged intermittently along a circumferential direction of the flange part 372. A claw part 411c (see FIG. 13) of the support body 40 described below is engageable with the recess. The claw part 411c permits the rotation of the second bobbin 37 in one direction (rightward (clockwise) in FIG. 7) and prohibits the rotation of the second bobbin 37 in the other direction (leftward (counterclockwise) in FIG. 7).

As illustrated in FIG. 11, the gear part 375 is formed on an outer surface (a surface on the +Z-direction side in the figure) of an upper side (+Z-direction side in the figure) flange part 373 of the second bobbin 37. Each of the teeth 376 constituting the gear part 375 has a steeply inclined surface 376a on one side and a gently inclined surface 376b on the other side. Although not particularly limited, as illustrated in FIG. 12, an angle θ₅ of the steeply inclined surface 376a relative to a main surface of the flange part 373 of the second bobbin 37 may be 45° or more and less than 90° (45° ≤ θ₅ < 90°). In contrast, an angle θ₆ of the gently inclined surface 376b relative to the main surface of the flange part 373 of the second bobbin 37 may be more than 0° and less than 45° (0° < θ₆ < 45°).

The second rotating body 38 is a gear member attached to the second bobbin 37, as illustrated in FIG. 4. Specifically, the third shaft part 43c of the support body 40 inserted into an inner hole of the second bobbin 37 is also inserted into an inner hole of the second rotating body 38. As a result, the second rotating body 38 is adjacent to the outer surface of the second bobbin 37 and is disposed coaxially with the second bobbin 37. As illustrated in FIG. 11, the second rotating body 38 includes the gear part 381 and a pinion gear part 383. The second rotating body 38 is made of, for example, a resin material, and the gear part 381 and the pinion gear part 383 are integrally formed.

The gear part 381 is formed on the lower surface (a surface on the -Z-direction side in the figure) of the second rotating body 38 such that the gear part 381 faces the gear part 375 of the second bobbin 37. Each of the teeth 382 constituting the gear part 381 has a steeply inclined surface 382a on one side and a gently inclined surface 382b on the other side, similarly to gear part 375 of the second bobbin 37 described above. Although not particularly limited, an angle θ₇ of the steeply inclined surface 382a relative to a main surface of the second rotating body 38 may be 45° or more and less than 90° (45° ≤ θ₇ < 90°), as illustrated in FIG. 12. In contrast, an angle θ₈ of the gently inclined surface 382b relative to the main surface of the second rotating body 38 may be more than 0° and less than 45° (0° < θ₈ < 45°). The steeply inclined surface 376a of the second bobbin 37 faces the steeply inclined surface 382a of the second rotating body 38, and the gently inclined surface 376b of the second bobbin 37 faces the gently inclined surface 382b of the second rotating body 38.

In the case in which the force transmitted from the second rotating body 38 to the second bobbin 37 is equal to or less than the predetermined value when the second rotating body 38 rotates in one direction (rightward (clockwise) in FIG. 7), the gear parts 375, 381 are engaged with each other, and the second bobbin 37 rotates with the second rotating body 38. In contrast, in the case in which the force transmitted from the second rotating body 38 to the second bobbin 37 is more than the predetermined value, the steeply inclined surfaces 376a, 382a cause the teeth 382 of the second rotating body 38 to ride over the teeth 376 of the second bobbin 37, thereby the engagement of the gear parts 375, 381 is released.

That is, a first rotation restriction mechanism 93 is implemented by the gear part 375 of the second bobbin 37 and the gear part 381 of the second rotating body 38. The first rotation restriction mechanism 93 restricts the rotation of the second bobbin 37 by causing the second rotating body 38 to idle with respect to the second bobbin 37 in the case in which the tension more than the predetermined value is applied to the second bobbin 37 via the cleaning element 5.

Here, in the above optical connector cleaning tool not including the roller unit, "tension of the predetermined value" is a tension that is equal to or more than a tension with which a fixed amount of the cleaning element drawn from the first bobbin is wound around the second bobbin, and that is less than the tension with which the rotation of the second bobbin rotates the first bobbin to draw the cleaning element from the first bobbin.

On the other hand, in the present embodiment, as described above, since the cleaning element 5 is clamped by the roller unit 32 at a potion between the pressing surface 211 of the cleaning shaft 20 and the second bobbin 37, an upper limit of the "tension of the predetermined value" is higher. That is, the "tension of the predetermined value" in the present embodiment is a tension that is equal to or more than a tension with which a fixed amount of the cleaning element 5 drawn out by the above-described first rotational drive mechanism 91 and the roller unit 32 is wound around the second bobbin 37, and that is less than a tension with which the cleaning element 5 sandwiched between the first and second rollers 33, 34 slips relative to the first and second rollers 33, 34 and the cleaning element 5 is drawn out from the first bobbin 31. The upper limit of the "tension of the predetermined value" is set based on, for example, a frictional force between the first and second rollers 33, 34 and the cleaning element 5, the pressing force of the second roller 34 against the first roller 33 by the elastic piece 352 of the support member 35, and the like. Since, in the present embodiment, the upper limit of the "tension of the predetermined value" is higher, the design of the first rotation restriction mechanism 93 becomes easier.

On the other hand, as described above, the rotation of the second bobbin 37 in the other direction (leftward (counterclockwise) in FIG. 7) is prohibited by the claw part 411c of the support body 40. When the second rotating body 38 rotates in the other direction (leftward (counterclockwise) in FIG. 7), the gently inclined surfaces 376b, 382b cause the teeth 382 of the second rotating body 38 to ride over the teeth 376 of the second bobbin 37, and the second rotating body 38 idles with respect to the second bobbin 37.

The gear part 381 of the second rotating body 38 corresponds to one example of the "first engagement part" of the aspect of the present invention, and the steeply inclined surface 382a of the second rotating body 38 corresponds to one example of the "first inclined surface" of the aspect of the present invention. Also, the gear part 375 of the second bobbin 37 corresponds to one example of the "second engagement part" of the aspect of the present invention, and the steeply inclined surface 376a of the second bobbin 37 corresponds to one example of the "second inclined surface" of the aspect of the present invention.

The pinion gear part 383 of the second rotating body 38 is formed on an upper surface (a surface on the +Z-direction side in the figure) of the second rotating body 38. As illustrated in FIG. 10, the rack gear part 64 (described below) of the housing 60 is engaged with the pinion gear part 383. The second rotational drive mechanism 92 that rotates the second bobbin 37 to wind the cleaning element 5 passed between the first and second rollers 33, 34 around the second bobbin 37 is implemented by the pinion gear part 383 and the rack gear part 64. The second rotational drive mechanism 92 rotates and drives the second bobbin 37 in accordance with the relative movement of the cleaning shaft 20 with respect to the housing 60, thereby the cleaning element 5 drawn from the pressing surface 211 of the cleaning shaft 20 into between the first and second rollers 33, 34 is wound around the second bobbin 37 to be collected.

The support body 40 is a support member that supports the cleaning shaft 20, the first bobbin 31, the roller unit 32, the first rotating body 36, the second bobbin 37, and the second rotating body 38 described above. The support body 40 includes, as illustrated in FIG. 13, a base part 41, a support wall 42, the shaft parts 43a to 43c, the support pin 44, a guide pin 45, the side wall 46, a tubular portion 47, and a protrusion 48.

The support wall 42, the shaft parts 43a to 43c, the support pin 44, the guide pin 45, and the side wall 46 are supported by the base part 41. The side wall 46 is provided at an edge portion on a lateral side (+X-direction side in the figure) of the base part 41, and an end portion of the elastic piece 352 of the support member 35 of the above-described roller unit 32 is in contact with the side wall 46. The tubular portion 47 protrudes from a front end side (+Y-direction side in the figure) wall of the support body 40 in the +Y-direction in the figure. The protrusion 48 protrudes from a rear end side (-Y-direction side in the figure) wall of the support body 40 in the -Y-direction in the figure. The support body 40 is made of, for example, a resin material, and the base part 41, the support wall 42, the shaft parts 43a to 43c, the support pin 44, the guide pin 45, the side wall 46, the tubular portion 47, and the protrusion 48 are integrally formed.

As illustrated in FIGS. 3 and 4, the cleaning shaft 20 is supported by the support body 40 so as to be rotatable about the rotation axis RA. Specifically, as illustrated in FIG. 13, the plurality of support walls 42 of the support body 40 have respective arc-shaped recesses corresponding to the outer circumferential surface of the expanded part 25 of the cleaning shaft 20. As the expanded part 25 is held in the recess of the support wall 42, the cleaning shaft 20 is rotatably supported by the support body 40. On the other hand, the shaft main body 24 of the cleaning shaft 20 protrudes, through the tubular portion 47 of the support body 40, from the support body 40 in the +Y-direction in the figure.

As illustrated in FIGS. 4 and 7, the first shaft part 43a is inserted into an inner hole of the first bobbin 31, and the first bobbin 31 is rotatably supported by the support body 40. Further, the second shaft part 43b is inserted into an inner hole of the first roller 33, and the first roller 33 is rotatably supported by the support body 40. The second shaft part 43b is also inserted into an inner hole of the first rotating body 36, and the first rotating body 36 is rotatably supported by the support body 40 on the same axis as the first roller 33. Similarly, the third shaft part 43c is inserted into an inner hole of the second bobbin 37, and the second bobbin 37 is rotatably supported by the support body 40. The third shaft part 43c is also inserted into an inner hole of the second rotating body 38, and the second rotating body 38 is rotatably supported by the support body 40 on the same axis as the second bobbin 37. The cleaning element 5, which passes through the passageway 26 of the cleaning shaft 20 and enters the support body 40, is guided between the first roller 33 and the second roller 34 via the guide pin 45.

As illustrated in FIG. 13, the base part 41 of the support body 40 includes the claw part 411a at a position facing the first bobbin 31. The claw part 411a is elastically deformable along a normal direction of the base part 41. As illustrated in FIG. 14, the claw part 411a has an inclined surface 412 and a vertical plane 413 at the front end portion. Since the inclined surface 412 allows the claw part 411a to disengage from the recess 314, the first bobbin 31 can rotate in one direction (rightward (clockwise) in FIG. 7). In contrast, since the claw part 411a cannot disengaged from the recess 314 when the vertical plane 413 abuts against an inner wall of the recess 314, the first bobbin 31 cannot rotate in the other direction (leftward (counterclockwise) in FIG. 7).

As illustrated in FIG. 13, the base part 41 of the support body 40 also includes the claw part 411b at a position facing the first roller 33. Similarly to the claw part 411a described above, the claw part 411b has an inclined surface and a vertical plane at a front end portion. The claw part 411b and the recess 334 of the first roller 33 make the first roller 33 rotatable in one direction (rightward (clockwise) in FIG. 7) but make the first roller 33 non-rotatable in the other direction (leftward (counterclockwise) in FIG. 7).

Similarly, as illustrated in FIG. 13, the base part 41 of the support body 40 also includes the claw part 411c at a position facing the second bobbin 37. Similar to the claw part 411a described above, the claw part 411c has an inclined surface and a vertical plane at a front end portion. The claw part 411c and the recess (not illustrated) of the second bobbin 37 make the second bobbin 37 rotatable in one direction (rightward (clockwise) in FIG. 7) but make the second ribbon 37 non-rotatable in the other direction (leftward (counterclockwise) in FIG. 7).

The guide nozzle 50 includes a first tubular body 51, a second tubular body 52, and a third biasing member 53, as illustrated in FIGS. 3 and 4. The guide nozzle 50 is disposed on a front end side (the +Y-direction side in the figure) of the support body 40. The guide nozzle 50 is supported by the support body 40 such that the first tubular body 51 can move along the Y-axis direction in the figure with respect to the support body 40.

Both the first and second tubular bodies 51, 52 have tubular shapes. The first tubular body 51 has an outer diameter smaller than an inner diameter of the second tubular body 52 and is inserted in an interior of the second tubular body 52. The first tubular body 51 is inserted into the second tubular body 52 so as to be relatively movable along the Y-axis direction in the figure. A step portion 511 provided at the substantially central portion of the first tubular body 51 is engaged with a protrusion part (not illustrated) formed on an inner circumferential surface of a front end of an inner hole of the second tubular body 52, thereby the forward movement (in the +Y-direction in the figure) of the first tubular body 51 is restricted.

The third biasing member 53 is inserted into the tubular portion 47 of the support body 40. A rear end side (the -Y-direction side in the figure) end portion of the third biasing member 53 is in contact with a front end side (the +Y-direction side in the figure) wall of the support body 40. On the other hand, a front end side (the +Y-direction side in the figure) end portion of the third biasing member 53 is in contact with a rear end side (the -Y-direction side in the figure) end portion of the first tubular body 51. That is, the third biasing member 53 is interposed between the first tubular body 51 and the support body 40. Examples of the third biasing member 53 include an elastic body such as a spring or a rubber, and examples of the spring include a coil spring.

The third biasing member 53 is inserted into the second tubular body 52 together with the first tubular body 51. The tubular portion 47 of the support body 40 is also inserted into the second tubular body 52. A projection 471 is formed on an outer circumferential surface of the tubular portion 47 of the support body 40, and a window portion 521 is formed on a rear end portion of an outer circumferential surface of the second tubular body 52. The projection 471 is inserted into the window portion 521, thereby the second tubular body 52 is fixed to the support body 40. In this state, the third biasing member 53 biases the first tubular body 51 toward the front (in the +Y-direction in the figure).

The portion of the cleaning shaft 20 that protrudes from the support body 40 is inserted into the guide nozzle 50. The portion of the cleaning shaft 20 that protrudes from the support body 40 is a portion of the cleaning shaft 20 that is on a more front end side (the +Y-direction side in the figure) than the expanded part 25, specifically, the cleaning head 21, the second biasing member 22, and the shaft main body 24.

In the normal state (a state in which the cleaner 1 is not being used (a state in which the front end of the guide nozzle 50 is not inserted into the adapter)), a front end of the cleaning shaft 20 does not protrude from the guide nozzle 50 and is positioned inside the guide nozzle 50. When cleaning the optical connector 100 with the cleaner 1, the front end of the guide nozzle 50 is inserted into the adapter. When the front end of the guide nozzle 50 abuts an end face 151 of the sleeve 150 (see FIG. 5(b)), the first tubular body 51 relatively retracts with respect to the second tubular body 52, and the front end of the cleaning shaft 20 protrudes from the guide nozzle 50.

The housing 60 houses a part of the cleaning unit 10 and the first biasing member 70. As illustrated in FIGS. 2 and 3, the housing 60 includes a housing main body 61 and the adjustment member 62. The housing main body 61 has two notches 612, 613, and an opening 611 is formed at a front end thereof. The cleaning unit 10 is housed within the housing main body 61 such that a front end portion of the cleaning unit 10 protrudes from the housing main body 61 through the opening 611. The cleaning unit 10 is housed in the housing main body 61 such that the cleaning unit 10 is relatively movable with respect to the housing main body 61 along the Y-axis direction in the figure.

As illustrated in FIG. 15, the adjustment member 62 includes the cam pin 63 and the rack gear part 64. As illustrated in FIG. 3, the adjustment member 62 covers the support body 40 such that the cleaning unit 10 is relatively movable with respect to the adjustment member 62 along the Y-axis direction in the figure.

The cam pin 63 of the adjustment member 62 is inserted into the cam groove 251 of the shaft member 23. Therefore, when the cleaning unit 10 relatively moves with respect to the housing 60, the cleaning shaft 20 rotates about the rotation axis RA by the rotation mechanism constituted by the cam pin 63 and the cam groove 251.

The rack gear part 64 of the adjustment member 62 is engaged with the pinion gear part 363 of the first rotating body 36. Thus, as the cleaning unit 10 relatively moves with respect to the housing 60, the first roller 33 is rotated by the first rotational drive mechanism 91 constituted by the rack gear part 64 and the pinion gear part 363.

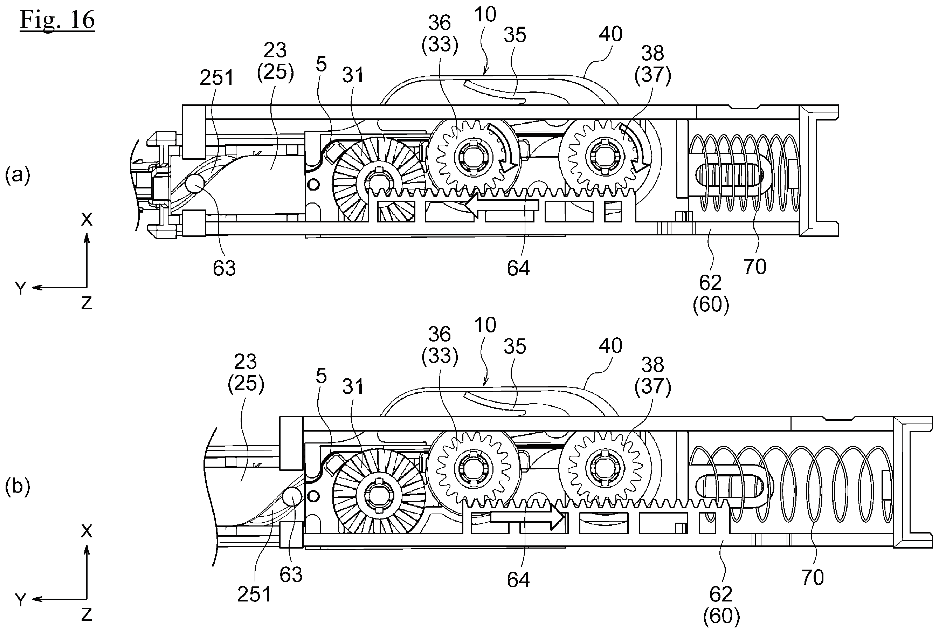

Specifically, when the housing 60 is pushed in toward the cleaning unit 10 and relatively moves forward (in the +Y-direction in the figure) (see FIG. 16(a)), the first rotational drive mechanism 91 converts a linear movement into a rotational movement, thereby rotationally driving the first roller 33 to which the first rotating body 36 is mounted. Since the claw part 411b of the support body 40 prohibits the rotation of the first roller 33 in the other direction (leftward (counterclockwise) in FIG. 7) as described above, when the housing 60 relatively moves rearward (in the -Y-direction in the figure) with respect to the cleaning unit 10 (see FIG. 16(b)), the first rotating body 36 idles with respect to the first roller 33, and the first roller 33 does not rotate.

Similarly, the rack gear part 64 of the adjustment member 62 is also engaged with the pinion gear part 383 of the second rotating body 38. Thus, when the cleaning unit 10 relatively moves with respect to the housing 60, the second bobbin 37 is rotated by the second rotational drive mechanism 92 constituted by the rack gear part 64 and the pinion gear part 383.

Specifically, when the housing 60 is pushed in toward the cleaning unit 10 and relatively moves forward (in +Y-direction in the figure) (see FIG. 16(a)), the second rotational drive mechanism 92 converts a linear movement into a rotational movement, thereby rotationally driving the second bobbin 37 to which the second rotating body 38 is mounted. Since the claw part 411c of the support body 40 prohibits the rotation of the second bobbin 37 in the other direction (leftward (counterclockwise) in FIG. 7) as described above, when the housing 60 relatively moves rearward (in the -Y-direction in the figure) with respect to the cleaning unit 10 (see FIG. 16(b)), the second rotating body 38 idles with respect to the second bobbin 37, and the second bobbin 37 does not rotate.

The rack gear part 64 corresponds to one example of the "first rack gear part" in the aspect of the present invention and also corresponds to one example of the "second rack gear part" in the aspect of the present invention. The pinion gear part 363 of the first rotating body 36 corresponds to one example of the "first pinion gear part" in the aspect of the present invention, and the pinion gear part 383 of the second rotating body 38 corresponds to one example of the "second pinion gear part" in the aspect of the present invention.

In the present embodiment, the pinion gear parts 363, 383 of the first and second rotating bodies 36, 38 are engaged with the same rack gear part 64; however, the present embodiment is not particularly limited thereto. For example, the rack gear part 64 may be divided into two, and the pinion gear parts 363, 383 of the first and second rotating bodies 36, 38 may be individually engaged with the respective rack gear parts 64.

The first biasing member 70 is inserted into the protrusion 48 of the support body 40, as illustrated in FIG. 3, and is interposed between a rear end side (the -Y-direction side in the figure) wall of the support body 40 and a rear end side wall 65 of the adjustment member 62. The first biasing member 70 biases the cleaning unit 10 toward the front end (in the +Y-direction in the figure). Examples of the first biasing member 70 include an elastic body such as a spring or a rubber, and examples of the spring include a coil spring.

The adjustment member 62 and the first biasing member 70 are housed within the housing main body 61 together with the cleaning unit 10. The adjustment member 62 is fixed to the housing main body 61 by engagement of an engagement piece 66 of the adjustment member 62 with the notch 612 of the housing main body 61.

The cleaning unit 10 can be advanced with respect to the housing main body 61 by advancing the adjustment member 62 with respect to the housing main body 61 and engaging the engagement piece 66 with the other notch 613. That is, a protrusion amount of the cleaning unit 10 from the housing main body 61 can be adjusted by engaging the engagement piece 66 with either the notch 612 or the notch 613. The adjustment of the protrusion amount of the cleaning unit 10 is performed before the cleaning operation of the optical connector 100, and the adjustment member 62 is not moved with respect to the housing main body 61 during the cleaning operation of the optical connector 100.

The internal operation of the cleaner 1 during the cleaning operation of the connection end surface 111 of the optical connector 100 performed using the cleaner 1 described above will be described with reference to FIGS. 16(a) and 16(b).

FIGS. 16(a) and 16(b) are diagrams illustrating an internal operation of the optical connector cleaning tool 1 in the present embodiment. FIG. 16(a) is a diagram illustrating a state in which the housing 60 is pushed in with respect to the cleaning unit 10, and FIG. 16(b) is a diagram illustrating a state in which a pushing operation of the housing 60 with respect to the cleaning unit 10 is released. In FIGS. 16(a) and 16(b), the cleaning element 5 fed from the first bobbin 31 to the cleaning shaft 20 is not illustrated.

First, an operator inserts the front end portion of the guide nozzle 50 of the cleaner 1 into the opening of the adapter. Therefore, the front end of the guide nozzle 50 abuts against the end face 151 of the sleeve 150. When the operator pushes the cleaner 1 toward the adapter, the third biasing member 53 contracts, the first tubular body 51 retracts with respect to the second tubular body 52, and the cleaning head 21 of the cleaning shaft 20 protrudes from the front end of the guide nozzle 50. The cleaning head 21 then enters the sleeve 150 (see FIG. 5(b)), and the cleaning head 21 brings the cleaning element 5 into contact with the connection end surface 111 of the optical connector 100.

Next, when the operator pushes the housing 60 against the guide nozzle 50 toward the +Y-direction side in the figure, the cleaning unit 10 relatively moves backward (in the -Y-direction in the figure) with respect to the housing 60 as illustrated in FIG. 16(a), the first biasing member 70 contracts and the second biasing member 22 also contracts. The contraction of the second biasing member 22 causes the cleaning head 21 to press the cleaning element 5 against the connection end surface 111 of the ferrule 110 with the appropriate pressing force.

The relative linear movement of the cleaning unit 10 with respect to the housing 60 is converted into the rotational movement of the first rotating body 36 by the rack gear part 64 and the pinion gear part 363. The gear parts 361, 335 of the first rotating body 36 and the first roller 33 are engaged with each other such that the rotation of the first rotating body 36 is transmitted to the first roller 33. Since first roller 33 is rotationally driven and the second roller 34 in contact with the first roller 33 also rotates, the first and second rollers 33, 34 draw the cleaning element 5 from the first bobbin 31 to feed the cleaning element 5 to the pressing surface 211 of the cleaning shaft 20. Therefore, the cleaning element 5 slides while being pressed against the connection end surface 111 of the optical connector 100, and the contaminant adhering to the connection end surface 111 is wiped.

Through the operation of the first rotational drive mechanism 91 and the roller unit 32, a fixed amount of the cleaning element 5 can be fed from the first bobbin 31 to the pressing surface 211 for each pushing operation. This fixed amount of the cleaning element 5 may be set based on the rotation amount of the first roller 33 along with the relative movement of the cleaning unit 10 with respect to the housing 60, the radius of the body part 331 of the first roller 33, and the like.

The relative linear movement of the cleaning unit 10 with respect to the housing 60 is converted into the rotational movement of the second rotating body 38 by the rack gear part 64 and the pinion gear part 383. The gear parts 381, 375 of the second rotating body 38 and the second bobbin 37 are engaged with each other such that the rotation of the second rotating body 38 is transmitted to the second bobbin 37. Therefore, the second bobbin 37 is rotationally driven, the cleaning element 5 drawn from the pressing surface 211 of the cleaning shaft 20 into between the first and second rollers 33, 34 is wound around the second bobbin 37, and the cleaning element 5 is collected by the second bobbin 37.

During this time, as described above, the first rotation restriction mechanism 93 (the gear part 375 of the second bobbin 37 and the gear part 381 of the second rotating body 38) causes the second rotating body 38 to idle with respect the second bobbin 37 when the tension more than the predetermined value is applied to the second bobbin 37 via the cleaning element 5. Therefore, even when the radius of the cleaning element 5 wound around the second bobbin 37 increases as the number of the cleaning operations increase, the situation in which a larger amount of the cleaning element 5 than the fixed amount drawn by the above-described first and second rollers 33, 34 is pulled out from the first bobbin 31by the rotation of the second bobbin 37 is suppressed.

When the cleaning unit 10 relatively moves backward (in the -Y-direction in the figure) with respect to the housing 60, the cam pin 63 relatively slides within the cam groove 251, and the cleaning shaft 20 rotates about the rotation axis RA. Therefore, even when the width of the thread-like or string-like cleaning element 5 is narrower than the connection end surface 111 to be cleaned, the contaminant can be wiped off from the entire area of the connection end surface 111. Although not particularly limited, the rotational angle of the cleaning shaft 20 is preferably 180° or more.

Next, when the operator releases the pushing operation of the housing 60 against the guide nozzle 50, as illustrated in FIG. 16(b), the cleaning unit 10 relatively moves forward (in the +Y-direction in the figure) with respect to the housing 60 by the elastic force of the first biasing member 70. During this time, as described above, since the rotation of the first roller 33 in the other direction (leftward (counterclockwise) in FIG. 7) is prohibited by the claw part 411b of the support body 40, the first rotating body 36 idles with respect to the first roller 33, and the first roller 33 does not rotate. Similarly, as described above, since the rotation of the second bobbin 37 in the other direction (leftward (counterclockwise) in FIG. 7) is also prohibited by the claw part 411c of the support body 40, the second rotating body 38 idles with respect to the second bobbin 37, and the second bobbin 37 does not rotate.

When the cleaning operation is finished, the operator removes the cleaner 1 from the optical connector 100 by pulling out the front end portion of the guide nozzle 50 of the cleaner 1 from the optical connector 100.

As described above, in the present embodiment, the first and second rollers 33, 34 sandwich the cleaning element 5 at a portion between the pressing surface 211 of the cleaning shaft 20 and the second bobbin 37, the first rotational drive mechanism 91 rotationally drives the first roller 33 in accordance with the relative movement of the cleaning shaft 20 with respect to the housing 60 to draw the cleaning element 5 from the first bobbin 31 by the first and second rollers 33, 34, and the second rotational drive mechanism 92 rotationally drives the second bobbin 37 in accordance with the above relative movement to collect the cleaning element 5 drawn into between the first and second rollers 33, 34 to the second bobbin 37.

In other words, in the present embodiment, the first and second rollers 33, 34 and the first rotational drive mechanism 91 can draw a fixed amount of the cleaning element 5 from the first bobbin 31, thereby it is possible to increase the number of cleanable times of the optical connector 100 by the optical connector cleaning tool 1. Moreover, in the present embodiment, the first and second rollers 33, 34 sandwich the cleaning element 5 to suppress the slippage of the cleaning element 5, thereby it is possible to suppress drawing the cleaning element 5 by more than the fixed amount due to the rotation of the second bobbin 37.

It should be noted that the embodiment described above are described to facilitate understanding of the present disclosure and are not described to limit the present disclosure. It is therefore intended that the elements disclosed in the above embodiment include all design modifications and equivalents to fall within the technical scope of the present disclosure.

For example, in the embodiment described above, when the cleaning unit 10 relatively moves rearward (in the -Y-direction in the figure) with respect the housing 60 (see FIG. 16(a)), the first rotational drive mechanism 91 rotates the first bobbin 31 and the second rotational drive mechanism 92 also rotates the first roller 33; however, the relationship between the direction of the relative movement of the cleaning unit 10 with respect to the housing 60 and the operation of the first and second rotational drive mechanisms 91, 92 is not particularly limited thereto.

For example, when the cleaning unit 10 relatively moves rearward (in the -Y-direction in the figure) with respect to the housing 60, the first roller 33 may be rotated by the first rotational drive mechanism 91, whereas when the cleaning unit 10 relatively moves forward (in the +Y-direction in the figure) with respect to the housing 60, the second bobbin 37 may be rotated by the second rotational drive mechanism 92. In the present case, for example, the rack gear part 64 of the adjustment member 62 is divided into two, and the two rack gear parts 64 are arranged in mutually opposite directions.

### Description of Reference Numerals

- 1: Optical connector cleaning tool
- 5: Cleaning element
- 10: Cleaning unit
- 20: Cleaning shaft
- 31: First bobbin
- 32: Roller unit
- 33: First roller
- 331a: Outer circumferential surface
- 334: Recess
- 335: Gear part
- 336b: Inclined surface
- 34: Second roller
- 341: Outer circumferential surface
- 35: Support member
- 36: First rotating body
- 361: Gear part
- 362b: Inclined surface
- 363: Pinion gear part
- 37: Second bobbin
- 375: Gear part
- 376a: Steeply inclined surface
- 38: Second rotating body
- 381: Gear part
- 382a: Steeply inclined surface
- 383: Pinion gear part
- 40: Support body
- 411a to 411c: Claw part
- 50: Guide nozzle
- 60: Housing
- 61: Housing main body
- 62: Adjustment member
- 64: Rack gear part
- 70: First biasing member
- 91: First rotational drive mechanism
- 92: Second rotational drive mechanism
- 93: First rotation restriction mechanism
- 94: Second rotation restriction mechanism
- 100: Optical connector
- 110: Ferrule
- 111: Connection end surface

## Claims

1. An optical connector cleaning tool that cleans a connection end surface of an optical connector, comprising:
a cleaning shaft that comprises a pressing surface pressing a cleaning element against the connection end surface and in which the cleaning element is wound on the pressing surface;
a housing that holds the cleaning shaft relatively movable along an axis direction of the cleaning shaft;
a first bobbin that is housed in the housing and feeds the cleaning element to the pressing surface;
a second bobbin that is housed in the housing and collects the cleaning element passing on the pressing surface;
first and second rollers that are housed in the housing and sandwich the cleaning element at a portion between the pressing surface and the second bobbin;
a first rotational drive mechanism that rotates and drives the first roller in accordance with a relative movement of the cleaning shaft with respect to the housing to draw the cleaning element from the first bobbin by the first and second rollers; and
a second rotational drive mechanism that rotates and drives the second bobbin in accordance with a relative movement of the cleaning shaft with respect to the housing to collect the cleaning element drawn by the first and second rollers to the second bobbin.

2. The optical connector cleaning tool according to claim 1, further comprising a first rotation restriction mechanism that restricts rotation of the second bobbin when a tension more than a predetermined value is applied to the second bobbin via the cleaning element.

3. The optical connector cleaning tool according to claim 1 or 2, further comprising a first rotating body mounted to the first roller, and
the first rotational drive mechanism comprises:
a first pinion gear part included in the first rotating body; and
a first rack gear that is relatively movable with respect to the first rotating body in accordance with a relative movement of the cleaning shaft with respect to the housing and that is engaged with the first pinion gear part.

4. The optical connector cleaning tool according to any one of claims 1 to 3, further comprising a second rotating body mounted to the second bobbin, and
the second rotational drive mechanism comprises:
a second pinion gear part included in the second rotating body; and
a second rack gear that is relatively movable with respect to the second rotating body in accordance with a relative movement of the cleaning shaft with respect to the housing and that is engaged with the second pinion gear part.

5. The optical connector cleaning tool according to claim 2, further comprising a second rotating body mounted to the second bobbin, and
the first rotation restriction mechanism comprises:
a first engagement part comprising a first inclined surface and included in the second rotating body; and
a second engagement part comprising a second inclined surface corresponding to the first inclined surface and included in the second bobbin, wherein
when a tension more than the predetermined value is applied to the second bobbin via the cleaning element, the rotating body idles with respect to the second bobbin by disengaging the first engagement part and the second engagement part.

6. The optical connector cleaning tool according to any one of claims 1 to 5, further comprising:
a first rotating body mounted to the first roller;
a support body that rotatably supports the first roller and the first rotating body; and
a second rotation restriction mechanism that prohibits rotation of the first roller in a first direction, wherein
the second rotation restriction mechanism comprises:
a third engagement part comprising a third inclined surface and included in the first rotating body;
a fourth engagement part comprising a fourth inclined surface corresponding to the third inclined surface and included in the first roller;
a fifth engagement part included in the first roller; and
a sixth engagement part included in the support body, wherein
when the first rotating body rotates in the first direction, the first rotating body idles with respect to the first roller by disengaging the third engagement part and the fourth engagement part, and rotation of the first roller in the first direction is prohibited by engaging the fifth engagement part and the sixth engagement part.

7. The optical connector cleaning tool according to any one of claims 1 to 6, further comprising a biasing mechanism that biases the second roller toward the first roller.

8. The optical connector cleaning tool according to any one of claims 1 to 7, wherein
the first roller comprises a first contact surface that contacts the cleaning element,
the second roller comprises a second contact surface that contacts the cleaning element, and
at least one of the first and second contact surfaces is made of an elastic material.
